(19) Europäisches Patentamt
European Patent Office
Office européen des brevets

(11) Publication number: **0 033 527 B1**

(12) **EUROPEAN PATENT SPECIFICATION**

(45) Date of publication of patent specification: **11.07.84**

(51) Int. Cl.³: **C 09 B 62/503,** D 06 P 3/85

(21) Application number: **81100689.9**

(22) Date of filing: **30.01.81**

(54) **Disperse-reactive dyes suitable for dyeing and printing polyester-cellulose blended fibres.**

(30) Priority: **31.01.80 IT 1958580**

(43) Date of publication of application:
**12.08.81 Bulletin 81/32**

(45) Publication of the grant of the patent:
**11.07.84 Bulletin 84/28**

(84) Designated Contracting States:
**BE CH DE FR GB LI NL**

(56) References cited:
**DE - A - 2 146 598**
**DE - A - 2 836 609**
**GB - A - 2 011 483**

(73) Proprietor: **AZIENDE COLORI NAZIONALI AFFINI ACNA S.P.A.**
**1/2, Largo Guido Donegani**
**Milan (IT)**

(72) Inventor: **Cipolli, Roberto, Dr.**
**66, Via Cesare Correnti**
**Seregno, Milan (IT)**
Inventor: **Nebuloni, Antonio**
**4, P.zza Risorgimento**
**Villapia di Parabiago, Milan (IT)**
Inventor: **Carugati, Giosue**
**40, Via Lombardia**
**Lomazzo-Manera, Como (IT)**
Inventor: **Burei, Giovanni, Dr.**
**39, Viale dell'Atleta**
**Seregno, Milan (IT)**
Inventor: **Verdi, Roberto, Dr.**
**11, Via alle Fornaci**
**Cogliate, Milan (IT)**
Inventor: **da Dalt, Vincenzo, Dr.**
**Residenza del Poggio**
**Segrate-Milano 2 (IT)**

(74) Representative: **Weinhold, Peter, Dr. et al,**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 033 527 B1

## Description

This invention relates to a new series of dyes which are employed for dyeing and printing blended materials comprising polyester and cellulose.

Processes are known for dyeing blended fibres made of polyester and cellulose which comprise more than one step, where the blended components are dyed in separate steps with different dyes (disperse dyes plus reactive dyes; disperse dyes plus vat dyes).

These processes exhibit serious drawbacks such as complexity of the process, possibility of reciprocal staining, necessity of using considerable amounts of dyes.

One of these dyeing processes is described, for example, in US-A-3,313,590.

Processes for dyeing blended fibres made of polyester and cellulose employing only one dye in one step only are also known, the best of them utilizing the swelling action exerted by water on cellulose.

This process exhibits the drawback of requiring the use of an organic solvent which evaporates or decomposes at the high operating temperatures, usually around 200°C, so causing problems of environmental pollution. Furthermore the solvent, being water-soluble, pollutes the waste water streams.

Moreover, the materials dyed according to such process exhibit a low stability against moisture and sublimation due to the fact that the employed dyes are not bound to the cellulose component of the blend.

This process is described, for example in US-A-3,706,525.

Another process, described in Japanese patent application 7,306,932, permits the use of only one dye for dyeing the blend and offers the advantage, compared with the preceding process, of not employing any solvent, since it is based on dyes having a reactive group of the type $CH_2{=}CHSO_2$— capable, besides of being bound to the cellulose component, of being fixed to the polyester component of the blend.

Such dyes, however, show some limitations in the covering power and in the fixing power on the blend resulting in shade variations as to the two components of said blend and give unsatisfactory yields. Also the fastness against light is poor.

It is an object of the present invention to provide a new series of disperse reactive dyes carrying at least an acylated beta-hydroxyethylsulphonyl group, which are free from solubilizing groups such as the sulphonic and the carboxylic groups, suitable to dye and print, in one step, fibres comprising polyester and cellulose. A further object is to provide the methods of utilizing and preparing same.

In particular, the present invention relates to disperse-reactive dyes of the general formula:

$$D\text{—}(SO_2C_2H_4OCOR)_n \qquad (I)$$

wherein:

D is the radical of the molecule of a dye of the azo, anthraquinone, methinic or quinophthalonic series, free from solubilizing groups such as the sulphonic and the carboxylic groups;

n is 1 or 2;

R is $C_1$—C-alkyl, preferably $C_1$—$C_4$-alkyl, optionally substituted by halogen or CN; a $C_2$—$C_8$-alkenyl, optionally substituted by halogen or CN; a $C_1$—$C_8$-alkoxy; a cycloalkoxyl; HN-$C_1$—$C_4$-alkyl; HN-halogen-$C_1$—$C_4$-alkyl and/or N($C_1$—$C_4$-alkyl)$_2$.

The dyes of general formula (I) are prepared, as illustrated herein, by condensation of the intermediate of general formula:

$$D\text{—}(SO_2C_2H_4OH)_n \qquad (II)$$

with the corresponding acylating agent. Among such agents the preferable ones are the following:

| | | |
|---|---|---|
| $R_1COCl$ | $(R_2)_2NCOCl$ | $(R_3CO)_2O$ |
| (III) | (IV) | (V) |
| $R_4OOC\text{—}Cl$ | $R_5\text{—}N{=}C{=}O$ | |
| (VI) | (VII) | |

wherein:

D and n have the meanings specified above, and:

$R_1$ is a $C_1$—$C_8$-alkyl, optionally substituted by halogen or CN; a $C_2$—$C_8$-alkenyl, optionally substituted by halogen or CN;

$R_2$ is a $C_1$—$C_4$-alkyl;

$R_3$ is a $C_1$—$C_8$-alkyl;

$R_4$ is a $C_1$—$C_8$-alkyl, optionally substituted by halogen;
$R_5$ is a $C_1$—$C_4$-alkyl or a halogen $C_1$—$C_4$-alkyl.

According to an alternative method for synthesizing the azo dyes an amine of general formula:

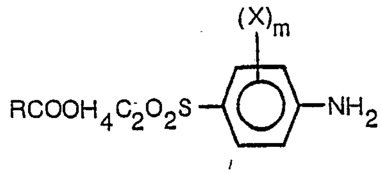

(VIII)

is diazotized in an aqueous acid medium and successively the diazonium salt is coupled, always in an aqueous medium, on a suitable coupling intermediate, such as, for example, the ones exemplified in the formulae (XI) to (XIV). It is also possible to diazotize an amine of formula:

$$Ar—NH_2 \qquad (IX)$$

and couple the resulting diazo compound on a coupling intermediate of formula:

$$Cop—SO_2C_2H_4OCOR \qquad (X)$$

such as, for example, the one exemplified in formula (XV); wherein: R has the meaning previously defined, and: X is H, a halogen, CN, $NO_2$, a $C_1$—$C_4$-alkyl, a $C_1$—$C_4$-alkoxyl; m is 1 or 2; Ar is the radical of a diazotizable component of the carbocyclic or heterocyclic series, and Cop is the radical of a coupling component.

The reaction between the intermediates of the general formula (II) and the reagents of the general formulae (III) to (VII), as well as the reactions for obtaining the intermediates having formula (VIII) and (X) respectively are generally carried out in the presence of aprotic solvents such as, for example, benzene, toluene, xylene, chlorobenzene, orthodichlorobenzene, pyridine, dimethylformamide, dimethylsulphoxide, at temperatures of from 0° to 140°C, optionally in the presence of basic catalysts such as, for instance, pyridine or acid acceptors such as e.g. triethylamine.

Generally the dyes of the general formula (I) possess a high degree of purity, so that no purification is required.

In the series of the disperse-reactive dyes of the present invention, the preferential classes of dyes are the ones corresponding to the following formulae:

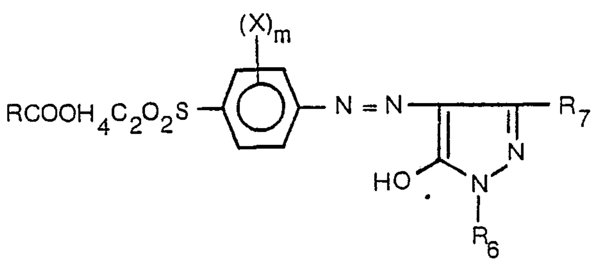

(XI)

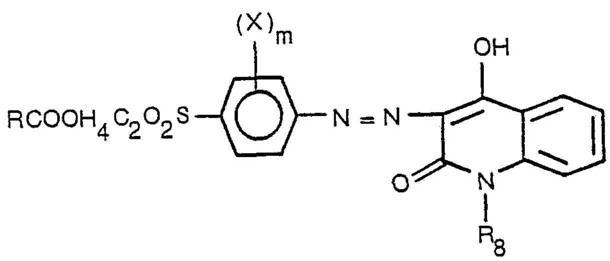

(XII)

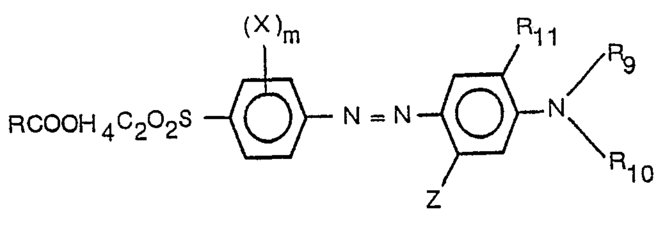

(XIII)

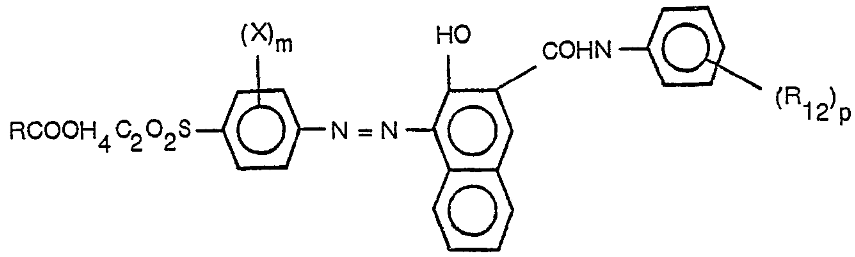

(XIV)

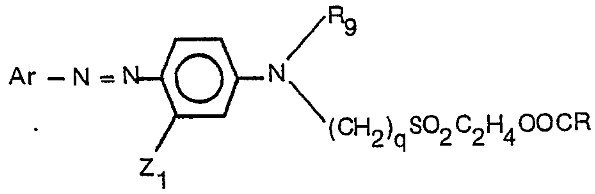

(XV)

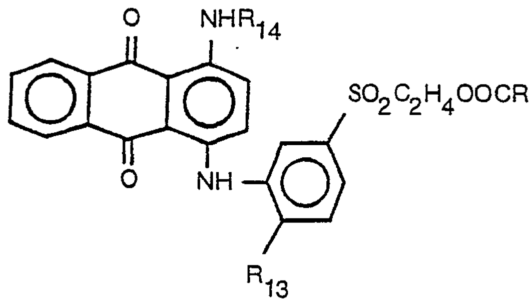

(XVI)

wherein:

R, X, m, Ar have the meanings as specified above, and:

$R_6$ is H; a $C_1$—$C_4$-alkyl, an aryl, e.g. phenyl, optionally substituted by 1 or 2 atoms of Cl or by a group $SO_2N(C_1$—$C_4\text{-alkyl})_2$;

$R_7$ is a $C_1$—$C_4$-alkyl, COO-$C_1$—$C_4$-alkyl;

$R_8$ is H, a $C_1$—$C_4$-alkyl, a $C_1$—$C_4$-hydroxyalkyl;

$R_9$ and $R_{10}$ which can be the same or different, are a $C_1$—$C_4$-alkyl; a cyano-$C_1$—$_4$-alkyl, a hydroxy-$C_1$—$_4$-alkyl, an alkoxy-$C_1$—$_4$-alkyl, a halogen-$C_1$—$_4$-alkyl, an alcyloxy-$C_1$—$_4$-alkyl, an aralkyl;

$R_{11}$ is H, a halogen, a $C_1$—$C_4$-alkyl, a $C_1$—$C_4$-alkoxyl;

$R_{12}$ is H, a halogen, a $C_1$—$C_4$-alkyl, a $C_1$—$C_4$-alkoxyl;

$R_{13}$ is H, a $C_1$—$C_4$-alkyl, a $C_1$—$C_4$-alkoxyl, a halogen;

$R_{14}$ is H, CO—$C_1$—$C_4$-alkyl, optionally substituted, CO—$C_2$—$C_8$-alkenyl, optionally substituted, CO—$C_1$—$C_8$-alkoxyl, CO-cycloalkoxyl, COHN—$C_1$—$C_4$-alkyl, COHN-halogen-$C_1$—$C_4$-alkyl, CON—$(C_1$—$C_4\text{-alkyl})_2$;

p is a number from 1 to 3;

q is 2 or 3;

Z is H, a $C_1$—$C_4$-alkyl, a halogen, a group NHCO—$C_1$—$_4$-alkyl;

$Z_1$ is H, a $C_1$—$C_4$-alkyl, a halogen.

The dyes of the present invention are particularly suitable for continuously dyeing, according to the pad-steam method or to the pad-thermosol method, and for printing "shade on shade" the fibres made of polyester and cellulose, imparting to them shades varying from greenish yellow to greenish blue, characterized by a high fixing and by good stabilities against light, sublimation, washings as well as against friction in dry and wet conditions.

As compared with the dyes of the prior art, the dyes of general formula (I) exhibit an easy receptivity and excellent properties regarding the covering power (absence of any shade variations on the two fibres forming the blend), the fixability and the dye yield (capability of providing intense shades).

Also the stability against sublimation and rubbing is excellent.

The best results can be obtained by using the dyes belonging to the preferential classes.

The dyes of general formula (I) preliminarily ground in the presence of suitable dispersants (such as, for example, the one obtained by condensation of beta-naphthalene sulphonic acid and formaldehyde) up to a particle size of 0.5—1 $\mu$m, are applied on blended fibres made of polyester and cellulose in the form of a liquid or an aqueous paste to which an alkaline substance, preferably sodium bicarbonate or sodium phosphate, and an auxiliary component, such as e.g. Anionico OL 495®, Antarox

CO 430® or Tanaprint ASD® either alone or in admixture with one another in amounts varying from 10 to 40 g/kg of the printing paste has been added. Similar results are obtained by using substances which, though they are not initially alkaline, generate alkalis during the process; sodium trichloroacetate is particularly effective.

The printing pastes may also contain other additives such as urea, in the amount of 50—100 g/kg of printing paste, and oxidants such as sodium m-nitrobenzene sulphonate.

The fixing of the dye on the blended fibres is obtained by subjecting the dyed and printed materials to heat treatments by means of dry air (Thermosol process) or superheated steam (HT process) at temperatures ranging from 170°C to 220°C for stretches of time of from 1 minute to 10 minutes.

Successively the dyed or printed blended fibres are subjected to a cleaning process in a bath containing soap or a synthetic detergent and a suitable alkaline agent such as e.g. sodium carbonate and/or sodium hydrate, in order to remove not-fixed dye, if any.

The blends that can be dyed and printed with the dyes of general formula (I) include cellulose fibres in the natural form such as, for example, cotton and flax, or in the regenerated form, such as, for example, viscose. The blends may include furthermore polyethylene terephthalate as polyester component.

Although the ratio between the polyester component and the cellulose component of the blend is not critical, it is preferable to employ blends having a cellulose-polyester ratio ranging from 80:20 to 20:80.

The following examples are given to illustrate the characteristics of the present invention, without being, however, a limitation thereof.

Unless otherwise specified, the term "parts" refers to parts by weight.

## Example 1

4.02 parts of 4-hydroxyethylsulphonyl aniline were dispersed in 8.0 parts by volume of HCl (d = 1.18) and 40 parts by volume of water.

The mass was cooled down to 0—5°C and in 5 minutes a solution of 1.4 parts of $NaNO_2$ in 10 parts by volume of water was poured into it.

It was stirred at 0—5°C for 1 hour whereupon the excess of $HNO_2$ was eliminated by sulphamic acid.

The diazo solution was clarified and poured at 5—10°C into a solution of 3.5 parts of 1-methyl-4-hydroxy-2-quinolone in 40 parts by volume of water and 1.0 part of NaOH; during the coupling reaction the pH was maintained alkaline by the addition of sodium carbonate.

Upon conclusion of the coupling the mass was filtered, the precipitate was washed to neutrality with water and dried.

6.9 parts of the following azoic intermediate were obtained:

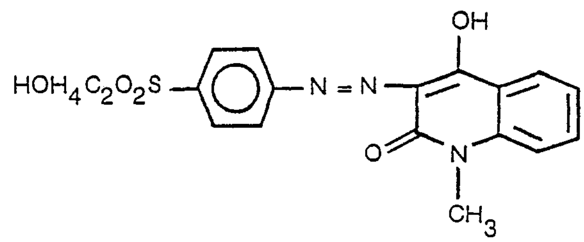

6.9 parts of this intermediate were successively treated at boiling temperature for 2 hours with 8.0 parts by volume of acetic anhydride.

The mass was allowed to cool down, then it was poured into 100 parts by volume of water.

After having stirred the mass for 1 hour, it was filtered and the precipitate was washed to neutrality.

The cake was dried, thus obtaining 7.2 parts of the dye:

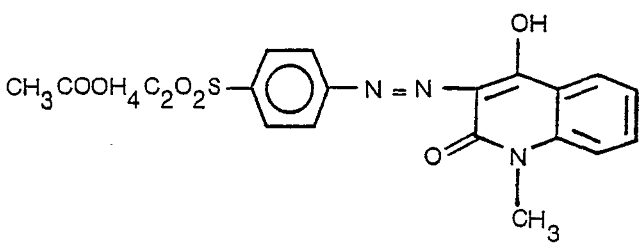

40 parts of this dye were microfined with 40 parts of Saltetra F (a condensate between beta-naphthalene sulphonic acid and formaldehyde), 25 parts of ethylene glycol, 1 part of Parmetol DF12® and 94 parts of water.

Using 150 parts of such mixture, 1000 parts of a printing paste were prepared by addition of 60 parts of urea, 10 parts of sodium m-nitro-benzene sulphonate, 500 parts of a solution of sodium alginate (10%), 10 parts of sodium bicarbonate, 20 parts of Tanaprint ASD® (a mixture of alkylphenol oxyethylenate and oleic acid oxyethylenate) and 250 parts of water. This paste was applied on a fabric of blended fibres at a polyester-cotton ratio of 65:35, ready for printing, whereupon said paste was allowed to dry at a temperature below 100°C.

The fixing of the dye on the two fibres of the blend was effected: a) in a thermosol apparatus operating at 210°C for 60 seconds, b) in a steaming apparatus operating at 180°C for 8 seconds.

The printing, either heat set or steamed, was subjected to a cleaning process in three steps:

1) cold and hot washing,

2) treating at 90°C for 10 minutes with 3 g/l of sodium hydrate, 3 g/l of sodium carbonate, 2 g/l of detergent Diapon T® and 2 g/l of ethylene diamine tetra-acetate,

3) rinsing.

A greenish yellow printing, perfectly hidden and exhibiting a uniform shade was obtained.

The obtained strength was 1/1 (E.C.E.). Good stability against light, moist washings and trichloroethylene cleaning, and against friction corresponding to such strength was also obtained.

Example 2

10 parts of the azoic intermediate of example 1 were dissolved in 60 parts by volume of pyridine; the solution was cooled to 0—10°C and 14 parts by volume of methyl chloroformate were then gradually added.

The reaction was allowed to continue for 2 hours at 0—10°C, whereupon the solution was poured into 300 parts of water.

It was stirred for about 30 minutes, then it was filtered and the cake was repeatedly washed with water.

By drying it was possible to obtain 9.4 parts of the dye:

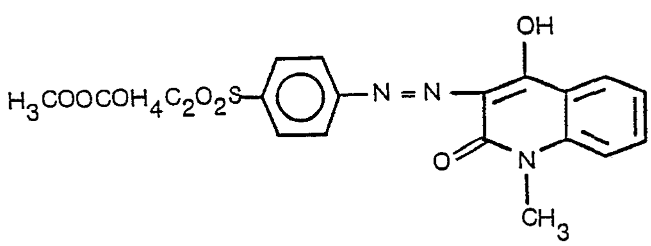

Microfining and application were carried out by operating under the same conditions as in the preceding example, thus obtaining a greenish yellow printed material with characteristics similar to the ones of example 1.

Example 3

10 parts of the azoic intermediate of example 1 were reacted at 130—140°C for 10 hours with 2.8 parts of butyl isocyanate and 35 parts by volume of ortho-dichlorobenzene.

At the end of the reaction the mass was allowed to cool, then it was filtered, washed with a small amount of petroleum ether and dried. 10.7 parts of the following dye were obtained:

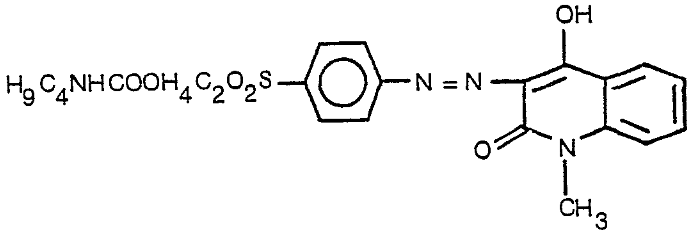

Microfining and application were effected under the same conditions of example 1, thus obtaining a greenish yellow printing having characteristics similar to the ones of said example.

Example 4

4.62 parts of 2-methoxy-5-hydroxyethylsulphonyl-aniline were dispersed in 8.0 parts by volume of HCl (d = 1.18) and 40 parts by volume of water.

The mass was cooled down to 0—5°C and a solution of 1.4 parts of $NaNO_2$ in 10 parts by volume of water was poured thereinto in about 5 minutes.

It was stirred at 0—5°C for 1 hour, then the excess of $HNO_2$ was eliminated with sulphamic acid.

The diazo solution was clarified and poured at 0—5°C into a solution of 3.5 parts of 1-phenyl-3-methyl-2-pyrazol-5-one in 40 parts of water and 1.0 parts of NaOH.

At the end of the coupling reaction it was filtered, the precipitate was washed to neutrality with water, and dried.

6.7 parts of the following azoic intermediate were obtained:

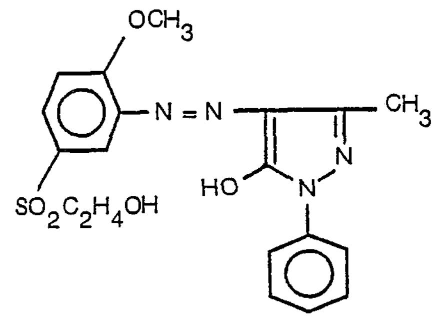

3.4 parts of the above intermediate were treated at boiling temperature for 30 minutes with 10 parts by volume of acetic anhydride. The mass was allowed to cool, whereupon it was poured into 100 parts by volume of water. After stirring for further 30 minutes it was filtered and the precipitate was washed to neutrality with water.

The cake was dried, thus obtaining 3.5 parts of the dye:

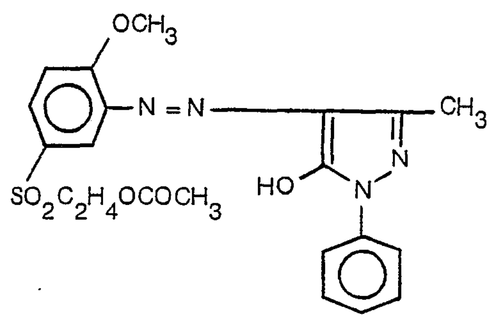

By effecting both microfining as well as application under the conditions of example 1 it was possible to obtain a perfectly hidden and uniform yellow printing endowed with good stabilities against light, moist washings and trichloroethylene cleanings, as well as against friction.

Example 5

4.1 parts of the azoic intermediate of example 4 were reacted with 1.1 parts of chloroethyl-isocyanate in the presence of 15 parts by volume of chlorobenzene at 120°C for 10 hours.

After the conclusion of the reaction the mass was cooled to room temperature, filtered, washed with a small amount of petroleum ether and dried.

4.9 parts of the following dye were obtained:

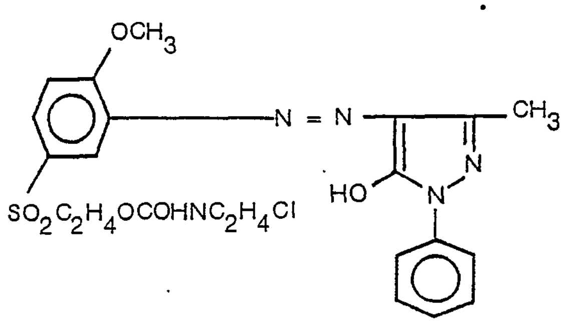

which, after having been microfined and applicated under the conditions of example 1, provided a yellow shade printing having characteristics similar to the ones of example 4.

Example 6

4.9 parts of 2-methoxy-4-hydroxyethylsulphonyl-5-methyl-aniline were diazotized according to the modalities described in example 4 and coupled with 4.64 parts of the ethyl 1-phenyl-2-pyrazol-5-one-3-carboxylate in solution in 40 parts by volume of acetic acid and 20 parts by volume of water.

During the coupling reaction the pH of the mass was maintained at 4—5 by addition of sodium acetate in crystals.

It was then operated as described in example 4, thus obtaining 9.2 parts of the intermediate dye:

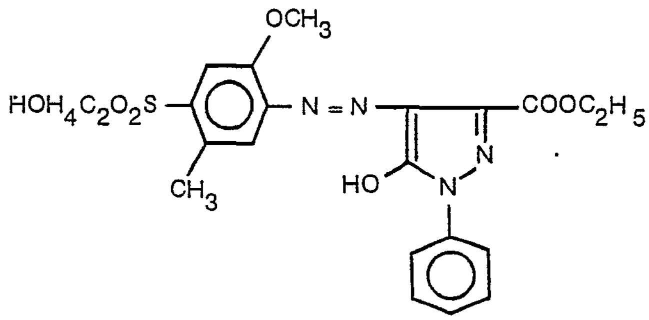

4.9 parts of this intermediate were successively reacted at boiling temperature for 1 hour with 10 parts of acetic anhydride.

The whole was allowed to cool down to room temperature, whereupon it was poured into 80 parts by volume of water.

After having stirred the mass for 1 hour, it was filtered and the precipitate was washed to neutrality with water.

The cake was dried, thus obtaining 5.0 parts of the dye:

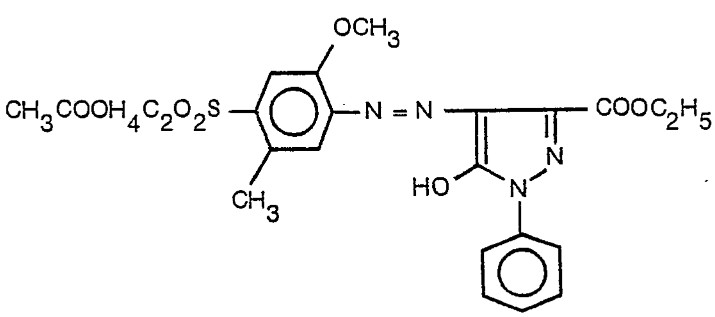

which, after having been microfined and applicated under the conditions of example 1, provided a perfectly hidden and uniform reddish yellow printing having good general stability properties.

Example 7

5.4 parts of 2.5-dichloro-4-hydroxyethylsulphonyl-aniline were diazotized and coupled with 4.65 parts of the ethyl 1-phenyl-2-pyrazol-5-one-3-carboxylate according to the modalities described in example 6.

10.85 g of the azoic intermediate:

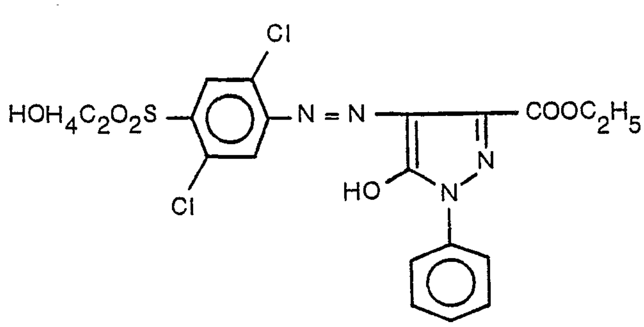

were obtained, which were reacted with 15 parts by volume of propionic anhydride for 2 hours at boiling temperature.

It was then operated as described in example 6, thus obtaining 11.0 parts of the dye:

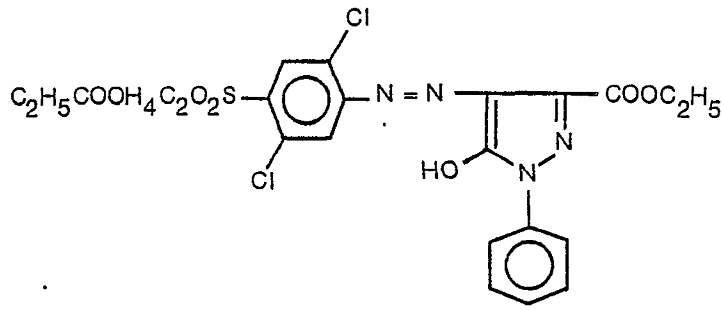

which, after having been microfined and applicated under the conditions described in example 1, provided a reddish yellow printing having characteristics similar to the ones of example 6.

Example 8

3.9 parts of the azoic intermediate of example 1 were reacted at 100°C for 8 hours with 1.1 parts of dimethyl carbamyl chloride in the presence of 30 parts by volume of xylene.

Upon completion of the reaction the mass was cooled to room temperature, and the separated precipitate was recovered by filtration, washed with a small amount of petroleum ether and dried.

4.8 parts of the dye:

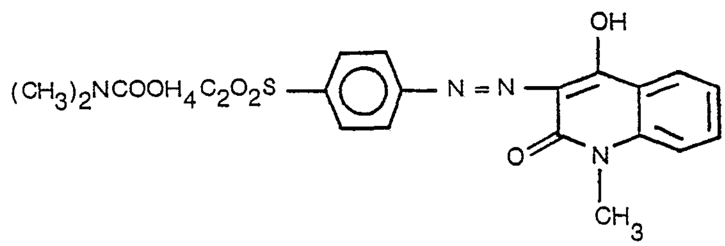

were obtained which, after microfining and application under the conditions described in example 1, provided a yellow shade printing having characteristics similar to the ones described in this example.

Example 9

4.62 parts of 2-methoxy-5-hydroxy-ethyl-sulphonyl-aniline were diazotized according to the modalities illustrated in example 4 and were coupled with 6.46 parts of 2,5-dimethoxyanilide of 2-hydroxy-3-naphthoic acid in 50 parts of water and 5.0 parts of NaOH; during the coupling reaction the pH of the mass was maintained alkaline by addition of $Na_2CO_3$.

By operating according to example 4 it was possible to obtain 10.8 parts of the following azoic intermediate:

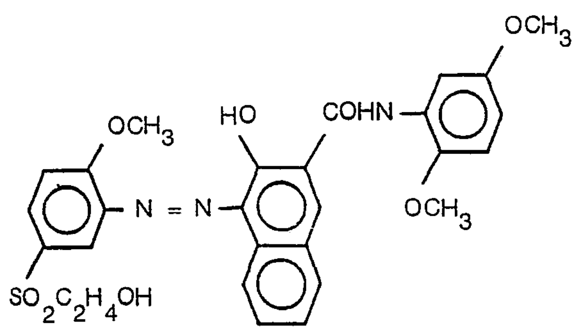

5.65 parts of which were reacted at boiling temperature for 30 minutes with 10 parts by volume of acetic anhydride. By then proceeding as described in example 4, 5.7 parts of the following dye were obtained:

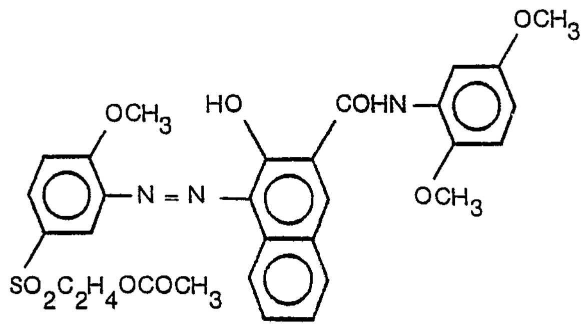

The dye was microfined under the conditions of example 1.

From 100 parts of this mixture 1000 parts of printing paste were prepared by addition of 80 parts of urea, 10 parts of sodium m-nitro-benzene sulphonate, 500 parts of a solution of sodium alginate (10%), 10 parts of sodium bicarbonate, 40 parts of Tanaprint ASD® and 260 parts of water.

By operating according to example 1, a perfectly hidden and uniform red shade printing having a strength of 1/1 (E.C.E.) and good general stability properties was obtained.

Example 10

5.65 parts of the intermediate azo-dye of example 9 were reacted at 100°C for about 8 hours with 1.3 parts of the chloride of n-pentanoic acid in 20 parts by volume of chlorobenzene and 0.8 parts by volume of pyridine.

Upon conclusion of the reaction, the mass was cooled to room temperature, then it was filtered and washed with a small amount of petroleum ether. By drying there were obtained 6.2 parts of the dye:

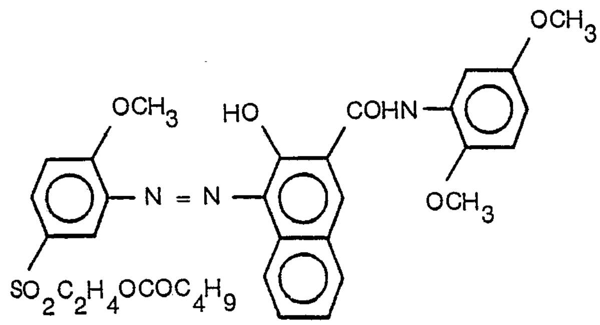

which, after having been microfined and applicated under the conditions described in example 9, provided a red shade printing having characteristics similar to those illustrated in example 9.

Example 11

2.01 parts of 3-hydroxy-ethyl-sulphonyl-aniline were diazotized and coupled, according to the modalities of example 1, with 3.23 parts of the 2.5-dimethoxy-anilide of 2-hydroxy-3-naphthoic acid.

The intermediate azo-dyes obtained in an amount of 5.1 parts was reacted under the conditions described in example 2, with 8.0 parts by volume of butyl chloroformate.

It was operated analogously with the above example, thus obtaining 5.2 parts of the dye:

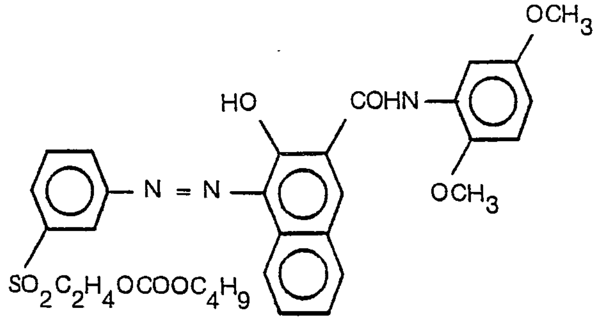

which, after having been microfined and applicated under the conditions of example 9, provided a perfectly hidden and uniform yellowish red printing having good general stability properties.

Example 12

4.9 parts of 2-methoxy-4-hydroxy-ethyl-sulphonyl-5-methyl-aniline were diazotized and coupled, according to the method described in example 6 with 4.12 parts of N.N-diethyl-m-aminoacet-anilide in 40 parts of water and 5 parts by volume of HCl (d = 1.18). During coupling the pH of the mass was maintained at 4—5 by addition of sodium acetate in crystals.

By operating according to example 6, it was possible to obtain 8.9 parts of the intermediate azo-dye:

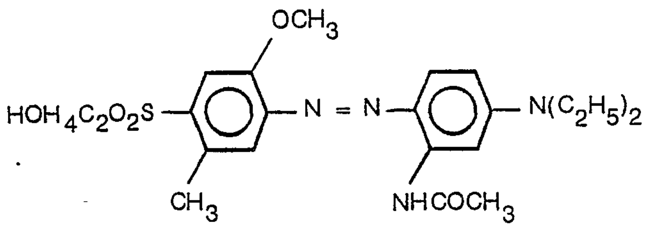

4.62 parts of this intermediate were reacted at boiling temperature for about 30 minutes with 6 parts of acetic anhydride. It was successively operated as described in example 1, thus obtaining 4.5 parts of the dye:

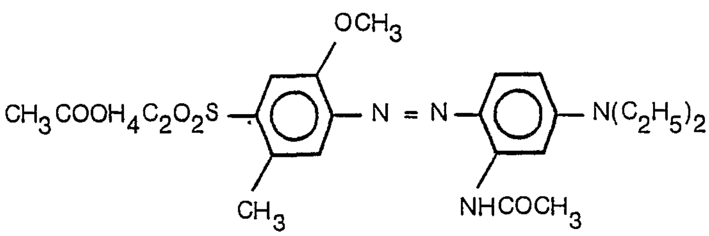

which, after having been microfined and applicated under the conditions of example 9, provided a perfectly hidden and uniform scarlet shade printing having good general stability properties.

Example 13

4.62 parts of the azoic intermediate of example 12 were reacted with 1.9 parts of pivalic anhydride in the presence of 1.1 parts of triethylamine and 25 parts by volume of dimethylformamide at a temperature of about 40°C for about 2 hours. At the end of the reaction the solution was poured into 200 parts of water, it was stirred for 30 minutes, whereupon the resulting precipitate was filtered and washed with water. By drying 4.8 parts of the following dye were obtained:

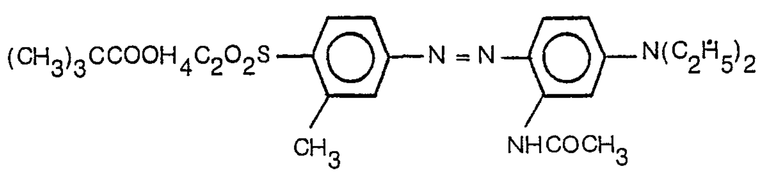

which, after having been microfined and applicated under the conditions already described before, provided a scarlet shade printing having characteristics similar to the ones illustrated in example 12.

Example 14

5.65 parts of the azoic intermediate of example 9 were reacted at 80°C for 12 hours with 1.2 parts of the chloride of vinyl acetic acid in 25 parts by volume of xylene and 0.8 parts by volume of pyridine.

Upon conclusion of the reaction, the mass was cooled to room temperature, then it was filtered and washed with a small amount of petroleum ether. By drying there was obtained 5.7 parts of the dye:

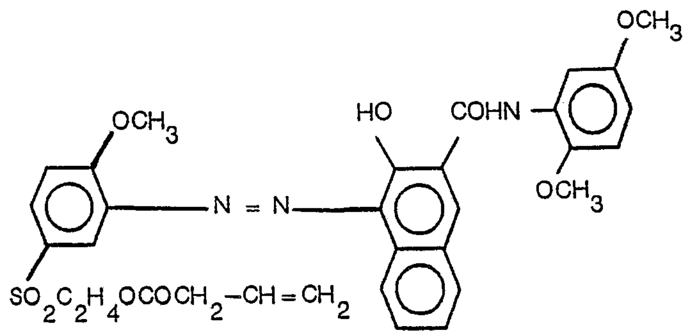

which, after having been microfined and applicated under the described conditions, provided a red shade printing exhibiting characteristics corresponding to those of example 9.

Example 15

4.84 parts of 2-bromo-4-nitro-6-cyanoaniline were added, at 0—5°C and within 1 hour, to a solution consisting of 1.38 parts of sodium nitrite in 40 parts by volume of $H_2SO_4$ (d = 1.84). It was then stirred for 30 minutes, whereupon the diazo solution was poured, at 5—10°C, into a solution of 5.46 parts of N-ethyl-N-(hydroxy-ethyl-sulphonyl)-ethyl-m-amino-toluidine in 40 parts of water and 2.0 parts by volume of HCl (d = 1.18). During the coupling reaction the mass was maintained at a pH of 4—5 by addition of sodium acetate in crystals.

After stirring for 1 hour, the mass was filtered and the precipitate was washed with water.

The cake was dried, thus obtaining 10.3 parts of the following intermediate dye:

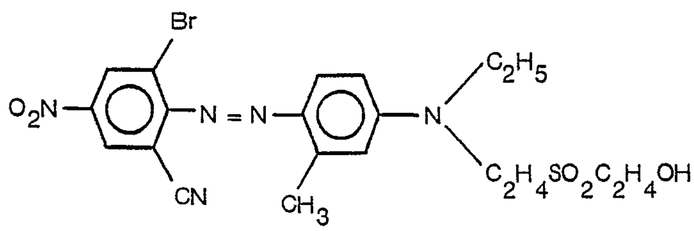

5.26 parts of such azo-dye intermediate were reacted with 10 parts by volume of acetic anhydride for 40 minutes at boiling temperature.

It was then operated according to example 1, thus obtaining 5.3 parts of the dye:

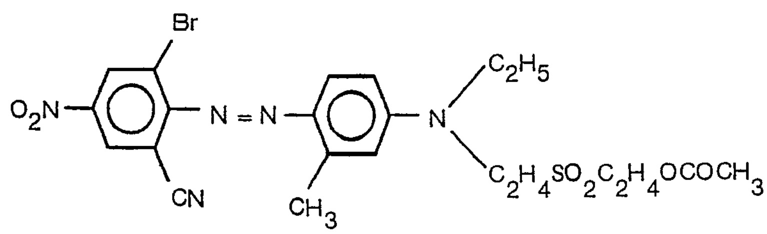

which, after having been microfined and applicated under the conditions of example 1, provided a perfectly hidden bluish violet printing having a uniform shade and good general stability properties.

Example 16

A solution of 3.26 parts of 2-cyano-4-nitro-aniline in 30 parts of acetic acid, 8 parts of propionic acid and 4 parts of water was cooled to 5—10°C whereafter there were added within about 1 hour, 20 parts by volume of 1N nitrosyl sulphuric acid.

After stirring for about 1 hour at 5—10°C, the diazo solution was gradually poured into the mass obtained by reacting 5.46 parts of N-ethyl-N-(hydroxyethylsulphonyl)-ethyl-m-amino-toluidine with 10 parts by volume of acetic anhydride, which then was boiled for 20 minutes and successively cooled to 5—10°C.

During the coupling reaction the pH was maintained at 4—5 by addition of sodium acetate in crystals.

The mass was filtered after 1 hour, then the precipitate was washed with water and dried.

8.3 parts of the dye:

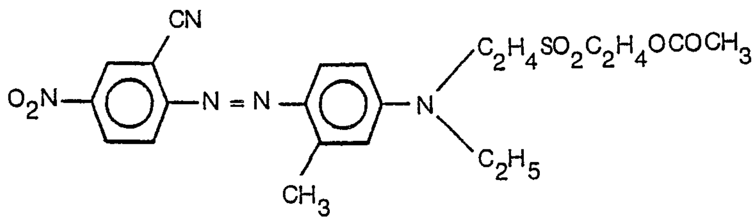

were obtained, which, after having been microfined and applicated under the conditions of example 1, provided a perfectly hidden ruby printing having a uniform shade and good general stability properties.

Example 17

5.55 parts of 2-chloro-5-acetoxyethyl-sulphonyl aniline were diazotized and coupled according to the modalities described in example 1, with 3.5 parts of 1-methyl-4-hydroxy-2-quinolone.

8.8 parts of the dye:

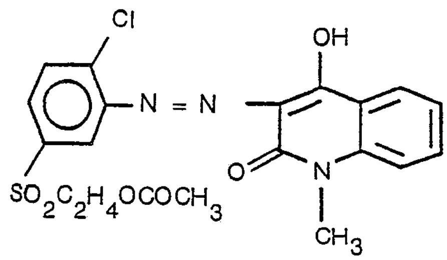

were obtained which, after having been microfined and applicated under the conditions already described, provided a perfectly hidden yellow printing having a uniform shade and good general stability properties.

Example 18

5.14 parts of 3-propioxyethylsulphonyl-aniline were diazotized and coupled with 6.46 parts of 2.5-dimethoxy anilide of 2-hydroxy-3-naphthoic acid according to the modalities described in example 9.

11.2 parts of the dye:

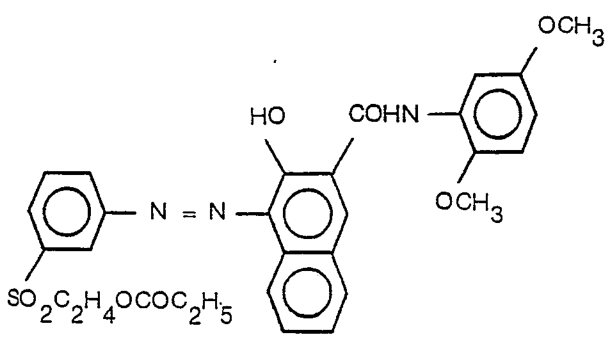

were obtained, which provided a perfectly hidden yellowish red printing having a uniform shade and good general stability properties.

Example 19

6.2 parts of 2-methoxy-5-hydroxy-ethylsulphonyl aniline were reacted at 95°C for 2 hours with 5.31 parts of 1-amino-4-bromo-2-anthraquinone-sulphonic acid in the presence of 8.8 parts of $NaHCO_3$ and 1.0 part of cuprous chloride.

Upon conclusion of the reaction, the mass was cooled to 50°C, acidified with HCl (d = 1.18) to a pH of 1—2 and filtered.

The precipitate was washed with a slightly acidic solution containing sodium chloride, and was successively treated with 8.0 parts of 30% sodium hydrate and 3.0 parts of glucose for 1 hour at 90°C.

After filtering, washing with water and drying, 4.25 parts of the anthraquinone intermediate:

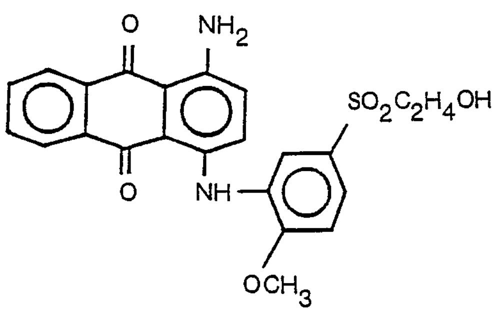

were obtained.

4.0 parts of this intermediate were dissolved in 9.0 parts of $H_2SO_4$ (d = 1.5) whereupon at room temperature and within 6 hours there were added 6.0 parts of acetic anhydride. The solution was stirred for about 24 hours, whereupon it was diluted with water, filtered and washed to neutrality with water. After drying, 3.4 parts of the dye:

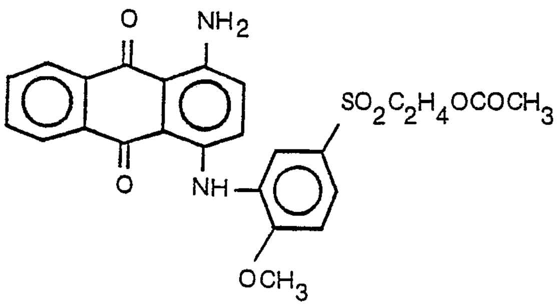

were obtained, which, after having been microfined and applicated under the conditions illustrated in example 9, provided a perfectly hidden neutral blue printing, having a uniform shade and good general stability properties.

Example 20

4.52 parts of the anthraquinone intermediate of example 19 were reacted at boiling temperature for 60 minutes with 12 parts by volume of acetic anhydride.

By operating as described in example 1, there were obtained 4.8 parts of the dye:

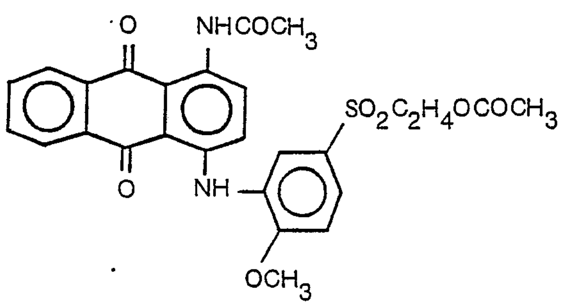

which provided a perfectly hidden violet printing having a uniform shade and good general stability properties.

Example 21

4.52 parts of the anthraquinone intermediate of example 19 were reacted at 80—90°C for 4 hours with 3.0 parts of butyl isocyanate in 20 parts by volume of orthodichloro-benzene. At the end of the reaction the mass was allowed to cool, then it was filtered and washed with petroleum ether.

After drying, 5.6 parts of the dye:

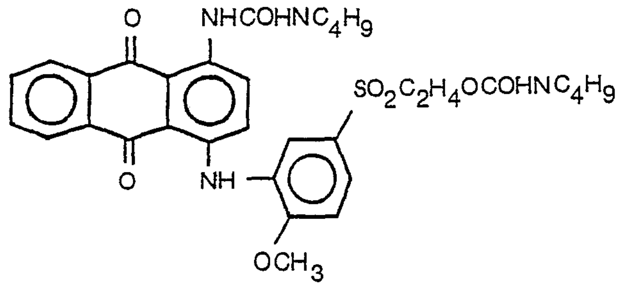

were obtained which provided a blue shade printing having characteristics similar to the ones of example 19.

Following exactly the modalities described in the preceding examples, the dyes having the following general formulae were obtained:

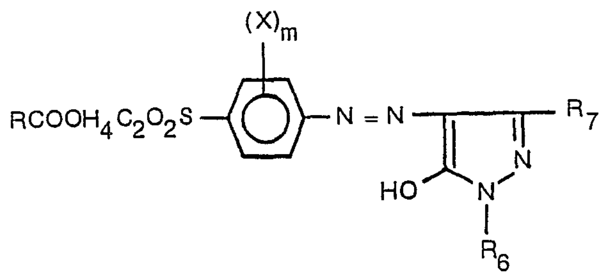

(XI)

| Example No. | R | Chain position | $(X)_m$ | $R_6$ | $R_7$ | Shade on blend |
|---|---|---|---|---|---|---|
| 22 | $C_2H_5$ | meta | 2-$OCH_3$ | m-$ClC_6H_4$ | $CH_3$ | yellow |
| 23 | $CH_3$ | para | H | 2.5-$Cl_2C_6H_3$ | $CH_3$ | greenish yellow |
| 24 | $CH_3O$ | meta | H | m-$SO_2N(CH_3)_2C_6H_4$ | $CH_3$ | yellow |
| 25 | $CH_3$ | para | H | $C_6H_5$ | $COOC_2H_5$ | yellow |
| 26 | $C_4H_9NH$ | para | 2-$OCH_3$; 5-$CH_3$ | $C_6H_5$ | $COOC_2H_5$ | golden yellow |
| 27 | $CH_3$ | para | 2.5-$Cl_2$ | $C_3H_7$ | $CH_3$ | reddish yellow |
| 28 | $C_3H_7$ | para | 2.6-$Br_2$ | $C_6H_5$ | $CH_3$ | brownish yellow |
| 29 | $CH_3$ | para | H | H | $CH_3$ | yellow |
| 30 | $CH_3O$ | meta | 2-$OCH_3$ | $C_6H_5$ | $COOC_2H_5$ | yellow |
| 31 | $CH_2=CH—CH_2$ | para | H | $C_6H_5$ | $CH_3$ | yellow |
| 32 | $(CH_3)_3C$ | para | H | $C_6H_5$ | $CH_3$ | yellow |

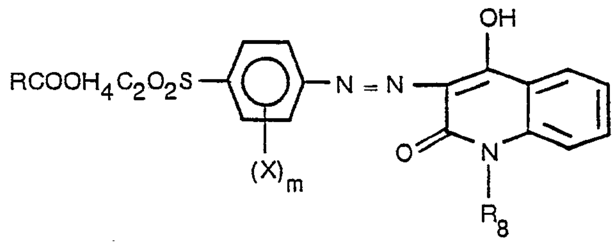

(XII)

| Example No. | R | Chain position | $(X)_m$ | $R_8$ | Shade on blend |
|---|---|---|---|---|---|
| 33 | $CH_3$ | para | H | H | greenish yellow |
| 34 | $C_2H_5$ | meta | $2\text{-}OCH_3$ | $CH_3$ | yellow |
| 35 | $C_4H_9O$ | para | $2\text{-}OCH_3$; $5\text{-}CH_3$ | $CH_3$ | golden yellow |
| 36 | $C_4H_9$ | para | $2.5\text{-}Cl_2$ | $C_2H_5$ | golden yellow |
| 37 | $ClC_2H_4NH$ | meta | H | $CH_3$ | greenish yellow |
| 38 | $CH_3O$ | para | H | $C_2H_5$ | greenish yellow |
| 39 | $CH_3$ | meta | 2-Cl | $C_2H_4OH$ | yellow |
| 40 | $(CH_3)_3C$ | para | H | $CH_3$ | greenish yellow |

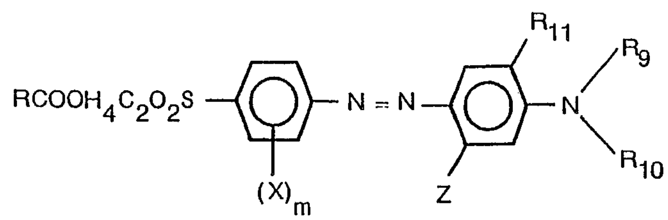

(XIII)

| Example No | R | Chain position | $(X)_m$ | $R_{11}$ | Z | $R_9$ | $R_{10}$ | Shade on blend |
|---|---|---|---|---|---|---|---|---|
| 41 | $C_2H_5$ | meta | 2-$OCH_3$ | H | $NHCOCH_3$ | $C_2H_5$ | $C_2H_5$ | orange |
| 42 | $C_4H_9O$ | para | H | H | $NHCOC_2H_5$ | $C_2H_5$ | $C_2H_5$ | orange |
| 43 | $CH_3$ | para | 2.5-$Cl_2$ | H | $NHCOC(CH_3)_3$ | $C_2H_5$ | $C_2H_5$ | bluish red |
| 44 | $C_4H_9NH$ | meta | 2-$OCH_3$ | H | $CH_3$ | $C_2H_5$ | $C_2H_5$ | golden yellow |
| 45 | $CH_3$ | para | 20 $CH_3$; 5 $CH_3$ | H | H | $C_2H_4CN$ | $C_2H_4CN$ | yellow red |
| 46 | $CH_3O$ | para | 20 $CH_3$; 5 $CH_3$ | H | $NHCOCH_3$ | $C_2H_4CN$ | $C_2H_5$ | red |
| 47 | $CH_3$ | para | 2.6-$Br_2$ | $OCH_3$ | $NHCOCH_3$ | $CH_3$ | $CH_3$ | bluish red |
| 48 | $C_3H_7$ | para | 2.6-$Br_2$ | H | $CH_3$ | $C_2H_5$ | $C_2H_5$ | brownish red |
| 49 | $ClC_2H_4NH$ | para | 20 $CH_3$;5 $CH_3$ | H | $NHCOCH_3$ | $C_2H_4CN$ | $CH_2$– 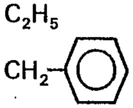 | red-yellow |
| 50 | $CH_3$ | meta | H | Cl | $CH_3$ | $C_2H_5$ | $C_2H_4OH$ | red-yellow |
| 51 | $CH_3$ | para | H | $OCH_3$ | $NHCOCH_3$ | $C_2H_5$ | $C_2H_5$ | red |
| 52 | $CH_3$ | para | 2-$NO_2$ | H | $NHCOCH_3$ | $C_2H_4Cl$ | $C_2H_5$ | bluish red |
| 53 | $CH_2{=}CH{-}CH_2$ | para | H | H | $NHCOCH_3$ | $C_2H_4OCOCH_3$ | $C_2H_4OCOCH_3$ | reddish yellow |
| 54 | $CH_3$ | para | 2.6-$(CH)_2$ | H | $NHCOCH_3$ | $C_2H_5$ | $C_2H_5$ | violet |
| 55 | $C_2H_5$ | para | 2.6-$(CN)_2$ | $OCH_3$ | $NHCOCH_3$ | $CH_3$ | $CH_3$ | blue |
| 56 | $CH_3$ | para | 20 $CH_3$; 5 $CH_3$ | H | $NHCOCH_3$ | $C_2H_5$ | $C_2H_5$ | scarlet |

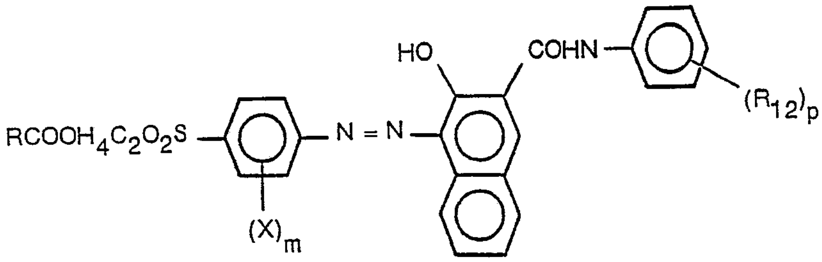

(XIV)

| Example No. | R | Chain position | $(X)_m$ | $R_{12})_p$ | Shade on blend |
|---|---|---|---|---|---|
| 57 | $CH_3$ | para | 2-$OCH_3$; 5-$CH_3$ | 2-$OC_2H_5$ | red |
| 58 | $C_3H_7$ | para | 2-$OCH_3$; 5-$CH_3$ | 2-$CH_3$ | ruby |
| 59 | $CH_3O$ | meta | 2-$OCH_3$ | 2-$OCH_3$ | scarlet |
| 60 | $C_4H_9NH$ | para | H | 2-$CH_3$; 4-Cl | scarlet |
| 61 | $ClC_2H_4NH$ | para | 2-$OCH_3$; 5-$CH_3$ | 3.4-$Cl_2$ | bluish red |
| 62 | $CH_3$ | para | 2.5-$Cl_2$ | 2.4-$(OCH_3)_2$; 5-Cl | ruby |
| 63 | $C_4H_9O$ | para | 2-$OCH_3$; 5-$CH_3$ | 2.5-$(OCH_3)_2$; 4-Cl | ruby |
| 64 | $C_4H_9(C_2H_5)CH$ | para | H | 2.5-$(OCH_3)_2$ | scarlet |
| 65 | $C_4H_9$ | meta | H | 2.5-$(OCH_3)_2$ | scarlet |
| 66 | $C_4H_9NH$ | para | 2-$OCH_3$; 5-$CH_3$ | H | red |
| 67 | $(CH_3)_3C$ | meta | 2-$OCH_3$ | 2.5-$(OCH_3)_2$ | scarlet |
| 68 | $CH_3$ | meta | 2-$OCH_3$ | 2-$OC_2H_5$ | reddish orange |
| 69 | $CH_3$ | para | 2-$NO_2$ | H | violet |

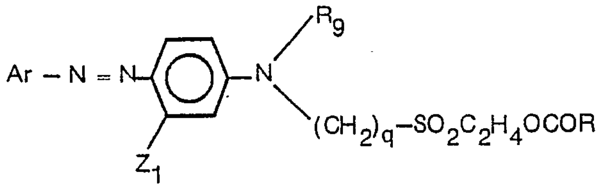

(XV)

| Example No. | $Ar-NH_2$ | R | $R_9$ | q | $Z_1$ | Shade on blend |
|---|---|---|---|---|---|---|
| 70 | 2-cyano-4-nitro-aniline | $CH_3$ | $C_2H_5$ | 2 | H | ruby |
| 71 | 2-methylsulphonyl-4-nitro-aniline | $C_2H_5$ | $C_2H_5$ | 3 | H | violet |
| 72 | 2-chloro-4-nitro-aniline | $C_4H_9NH$ | $C_2H_5$ | 3 | $CH_3$ | red |
| 73 | 2-chloro-4-methylsulphonyl-aniline | $CH_3O$ | $C_2H_5$ | 2 | $CH_3$ | orange |
| 74 | 4-nitro-aniline | $ClC_2H_4NH$ | $C_2H_4CN$ | 2 | Cl | scarlet |
| 75 | 6-ethoxy-2-amino-benzothiazole | $CH_3$ | $C_2H_4OH$ | 2 | $CH_3$ | bluish red |
| 76 | 3-amino-5-nitro-benzoisothiazole | $C_4H_9$ | $C_2H_5$ | 3 | $CH_3$ | greenish blue |
| 77 | 2-nitro-4-dimethylaminosulphonyl-aniline | $C_4H_9O$ | $C_2H_4CN$ | 2 | Cl | reddish brown |
| 78 | 2.5-dichloro-4-methylsulphonyl-aniline | $CH_3$ | $C_2H_5$ | 2 | $CH_3$ | brownish red |
| 79 | 6-methylsulphonyl-2-amino-benzothiazole | $C_2H_5$ | $C_2H_5$ | 2 | $CH_3$ | ruby |
| 80 | 2-amino-5-nitro-thiazole | $(CH_3)_3C$ | $C_2H_5$ | 2 | H | blue |

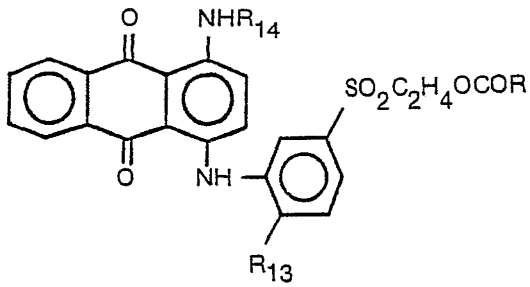

(XVI)

| Example No. | R | $R_{13}$ | $R_{14}$ | Shade on blend |
|---|---|---|---|---|
| 81 | $CH_3O$ | $OCH_3$ | $CH_3OOC$ | reddish blue |
| 82 | $CH_3$ | H | H | reddish blue |
| 83 | $ClC_2H_4NH$ | $OCH_3$ | $ClC_2H_4NHCO$ | blue |
| 84 | $CH_3$ | H | $CH_3CO$ | violet |
| 85 | $C_4H_9NH$ | H | $C_4H_9NHCO$ | blue |
| 86 | $C_4H_9O$ | H | $C_4H_9OOC$ | reddish blue |
| 87 | $CH_3$ | Cl | H | neutral blue |
| 88 | $C_2H_5$ | Cl | $C_2H_5CO$ | violet |
| 89 | $CH_3$ | $CH_3$ | H | blue |
| 90 | $C_4H_9NH$ | $CH_3$ | $C_4H_9NHCO$ | blue |
| 91 | $C_4H_9O$ | $CH_3$ | $C_4H_9OOC$ | reddish blue |
| 92 | $C_2H_5$ | $CH_3$ | $C_2H_5CO$ | violet |

## Claims

1. Disperse-reactive dyes of the general formula:

$$D—(SO_2C_2H_4OCOR)_n \qquad (I)$$

wherein:

D is the radical of the molecule of a dye of the azo, anthraquinone, methinic or quinophthalonic series free from solubilizing groups, such as sulphonic and the carboxylic groups;

n is 1 or 2 and

R is a $C_1$—C-alkyl, optionally substituted by a halogen or CN; a $C_2$—$C_8$-alkenyl, optionally substituted by a halogen or CN; a $C_1$—$C_8$-alkoxyl; a cycloalkoxyl; a HN-$C_1$—$C_4$-alkyl; a HN-halogen-$C_1$—$C_4$-alkyl; a N($C_1$—$C_4$-alkyl)$_2$.

2. A process for preparing the dyes of general formula (I) according to claim 1 characterized in that an intermediate dye of general formula:

$$D—(SO_2C_2H_4OH)_n \qquad (II)$$

is reacted with an acylating agent of formula

| $R_1COCl$, | $(R_2)_2NCOCl$, | $(R_3CO)_2O$, |
|---|---|---|
| (III) | (IV) | (V) |

$R_4OOC—Cl$ or $R_5—N{=}C{=}O$

(VI) (VII)

wherein:

D and n have the meanings defined in claim 1, and:

$R_1$ is a $C_1—C_8$-alkyl, optionally substituted by a halogen or CN; a $C_2—C_8$-alkenyl, optionally substituted by a halogen or CN;

$R_2$ is a $C_1—C_4$-alkyl;

$R_3$ is a $C_1—C_8$-alkyl;

$R_4$ is a $C_1—C_8$-alkyl, optionally substituted by a halogen and

$R_5$ is a $C_1—C_4$-alkyl; a halogen $C_1—C_4$-alkyl.

3. A process for preparing azoic dyes of general formula (I) according to claim 1, characterized in that an amine of general formula:

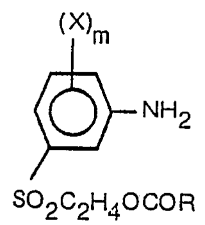

(VIII)

is diazotized in an aqueous acid medium and the resulting diazo compound is coupled, always in an aqueous medium, with a suitable coupling intermediate; or an amine of formula:

$$Ar—NH_2 \qquad (IX)$$

is diazotized and its diazonium salt is coupled with a coupling intermediate of formula:

$$Cop—SO_2C_2H_4OCOR \qquad (X)$$

wherein:

R has the meaning defined in claim 1, and

X is H, a halogen, CN, $NO_2$, a $C_1—C_4$-alkyl, a $C_1—C_4$-alkoxyl;

m is 1 or 2;

Ar is the radical of a diazotizable component of the carbocyclic or heterocyclic series; and

Cop is the radical of a coupling component.

4. A process for dyeing and printing, in one step only, blended fibres made of polyester and cellulose, characterized in that the dyes of general formula (I) according to claim 1 are employed.

5. Cellulose materials blended with synthetic materials, in particular blended fibres, made of polyester and cotton, dyed or printed with the dyes according to claim 1.

**Patentansprüche**

1. Dispers-reaktive Farbstoffe der allgemeinen Formel

$$D—(SO_2C_2H_4)OCOR)_n \qquad (I)$$

worin:

D der Rest eines Moleküls eines Farbstoffes aus der Azo-, Anthrachinon-, Methin- oder Chinophthalon-Reihe, der frei von löslichmachenden Gruppen, wie z.B. Sulfon- und Carboxyl-Gruppen, ist;

n gleich 1 oder 2 ist und

R $C_1—C_8$-Alkyl, gegebenenfalls durch Halogen oder CN substituiert; $C_2—C_8$-Alkenyl, gegebenenfalls durch Halogen oder CN substituiert; $C_1—C_8$-Alkoxyl; Cycloalkoxyl; $HN—C_1—C_4$-Alkyl; HN—Halogen-$C_1—C_4$-Alkyl; $N(C_1—C_4\text{-Alkyl})_2$ bedeutet.

2. Verfahren zur Herstellung der Farbstoffe der allgemeinen Formel I gemäß Anspruch 1, dadurch gekennzeichnet, daß ein intermediärer Farbstoff der allgemeinen Formel:

$$D—(SO_2C_2H_4OH)_n \qquad (II)$$

mit einem Acylierungsmittel der Formel:

$R_1COCl$, (III) $(R_2)_2NCOCl$, (IV) $(R_3CO)_2O$, (V)

$R_4OOC—Cl$ (VI) oder $R_5—N{=}C{=}O$ (VII)

umgesetzt wird, worin:

D und n dieselben Bedeutungen, wie in Anspruch 1 definiert, haben und:

$R_1$ $C_1$—$C_8$-Alkyl, gegebenenfalls durch Halogen oder CN substituiert; $C_2$—$C_8$-Alkenyl, gegebenenfalls durch Halogen oder CN substituiert, bedeutet;

$R_2$ $C_1$—$C_4$-Alkyl ist;

$R_3$ $C_1$—$C_8$-Alkyl ist;

$R_4$ $C_1$—$C_8$-Alkyl, gegebenenfalls durch Halogen substituiert ist und

.$R_5$ $C_1$—$C_4$-Alkyl; Halogen-$C_1$—$C_4$-Alkyl bedeutet.

3. Verfahren zur Herstellung von Azo-Farbstoffen der allgemeinen Formel I nach Anspruch 1, dadurch gekennzeichnet, daß ein Amin der allgemeinen Formel

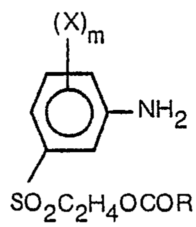

(VIII)

in einem wässrigen Säuremedium diazotiert wird und die resultierende Diazoverbindung, immer in einem wässrigen Medium, mit einem geeigneten Kupplungs-Zwischenprodukt gekuppelt wird; oder daß ein Amin der Formel

$$Ar—NH_2 \quad (IX)$$

diazotiert wird und sein Diazoniumsalz mit einem Kupplungs-Zwischenprodukt der Formel

$$Cop—SO_2C_2H_4OCOR \quad (X)$$

gekuppelt wird, worin:

R die Bedeutung, wie in Anspruch 1 definiert, hat und

X gleich H, Halogen, CN, $NO_2$, $C_1$—$C_4$-Alkyl, $C_1$—$C_4$-Alkoxyl ist;

m gleich 1 oder 2 ist;

Ar der Rest einer diazotierbaren Komponente aus der carbozyklischen oder heterozyklischen Reihe bedeutet; und

Cop der Rest einer Kupplungskomponente ist.

4. Verfahren zum Färben und Bedrucken, in nur einer Stufe, von aus Polyester und Cellulose hergestellten Mischfasern, dadurch gekennzeichnet, daß die Farbstoffe der allgemeinen Formel I nach Anspruch 1 verwendet werden.

5. Mit synthetischen Materialien gemischte Cellulose-materialien, insbesondere Mischfasern aus Polyester und Baumwolle, die mit den Farbstoffen nach Anspruch 1 gefärbt oder bedruckt worden sind.

## Revendications

1. Colorant de dispersion-réactif de formule générale:

$$D—(SO_2C_2H_4OCOR)_n \quad (I)$$

dans laquelle:

D est le radical de la molécule d'un colorant des séries azo, anthraquinonique, méthinique ou quinophtalinique, exempt de groupes solubilisants tels que les groupes sulfoniques et carboxyliques;

n est égal à 1 ou 2; et

R représente un alkyle en $C_{1-8}$ éventuellement substitué par un halogène ou CN; un alkényle en $C_{2-8}$ éventuellement substitué par un halogène ou CN; un alkoxyle en $C_{1-8}$; un cycloalkoxyle; un alkyle en $C_{1-4}$-NH; un NH-halogèno-alkyle en $C_{1-4}$; un N(alkyle en $C_{1-4}$)$_2$.

2. Procédé de préparation des colorants de formule générale (I) selon la revendication 1, caractérisé en ce que l'on fait réagir un colorant intermédiaire de formule générale:

$$D—(SO_2C_2H_4OH)_n \qquad (II)$$

avec un agent d'acylation de formules:

| | | |
|---|---|---|
| $R_1COCl$ | $(R_2)_2NCOCl$ | $(R_3CO)_2O$ |
| (III) | (IV) | (V) |
| $R_4OOC—Cl$ | ou | $R_5—N{=}C{=}O$ |
| (VI) | | (VII) |

dans lesquelles:

D et n ont les significations définies dans la revendication 1; et:

$R_1$ représente un alkyle en $C_{1-8}$, éventuellement substitué par un halogène ou CN; un alkényle en $C_{2-8}$ éventuellement substitué par un halogène ou CN;

$R_2$ est un alkyle en $C_{1-4}$;

$R_3$ est un alkyle en $C_{1-8}$;

$R_4$ est un alkyle en $C_{1-8}$ éventuellement substitué par un halogène et,

$R_5$ est un alkyle en $C_{1-4}$; un halogénoalkyle en $C_{1-4}$.

3. Procédé de préparation de colorant azoïque de formule générale (I) selon la revendication 1, caractérisé en ce qu'une amine de formule générale:

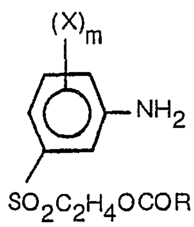

(VIII)

est diazotée dans un milieu acide aqueux et le composé diazoïque qui en résulte est copulé, toujours dans un milieu aqueux, avec un intermédiaire de copulation convenable; ou un amine de formule:

$$Ar—NH_2 \qquad (IX)$$

est diazotée et son sel de diazonium est copulé avec un intermédiaire de copulation de formule:

$$Cop—SO_2C_2H_4OCOR \qquad (X)$$

dans laquelle:

R a la signification définie dans la revendication 1; et

X représente H, un halogène, CN, $NO_2$, un alkyle en $C_{1-4}$, un alkoxyle en $C_{1-4}$;

m est égal à 1 ou 2;

Ar est le radical d'un composant diazotable des séries carboxyliques ou hétérocycliques; et

Cop est le radical d'un composant de copulation.

4. Procédé de teinture et d'impression en une étape seulement de fibres mélangées constituées de polyester et de cellulose, caractérisé en ce que l'on emploie les colorants de formule générale (I) selon la revendication 1.

5. Matières cellulosiques mélangées avec des matières synthétiques, en particulier fibres mélangées faites de polyester et de coton, teintes ou imprimées avec les colorants selon la revendication 1.